Europäisches Patentamt

European Patent Office

Office européen des brevets

(11) Veröffentlichungsnummer: **0 299 116**
**A1**

## EUROPÄISCHE PATENTANMELDUNG

(21) Anmeldenummer: 87201374.3

(22) Anmeldetag: 16.07.87

(51) Int. Cl.4 **H04R 9/02 , H02K 55/00 , H01F 5/08**

(43) Veröffentlichungstag der Anmeldung:
**18.01.89 Patentblatt 89/03**

(84) Benannte Vertragsstaaten:
**AT BE DE FR GB IT SE**

(71) Anmelder: **Philips Patentverwaltung GmbH
Wendenstrasse 35 Postfach 10 51 49
D-2000 Hamburg 1(DE)**

(84) **DE**

(71) Anmelder: **N.V. Philips' Gloeilampenfabrieken
Groenewoudseweg 1
NL-5621 BA Eindhoven(NL)**

(84) **BE FR GB IT SE AT**

(72) Erfinder: **Comberg, Albert, Dr.
Dreirosenstrasse 20
D-5100 Aachen(DE)**
Erfinder: **Hansen, Norbert, Dr.
Neustrasse 78
D-5106 Roetgen(DE)**

(74) Vertreter: **Kupfermann, Fritz-Joachim,
Dipl.-Ing. et al
Philips Patentverwaltung GmbH
Wendenstrasse 35 Postfach 10 51 49
D-2000 Hamburg 1(DE)**

(54) **Tauchspulaktuator.**

(57) Die Erfindung bezieht sich auf einen Tauchspulaktuator für elektromagnetische Stellvorgänge, insbesondere für das Ansteuern von elektroakustischen oder elektromechanischen Vorrichtungen (2) mit einer mit der Vorrichtung (2) mechanisch verbundenen Tauchspule (5) und einem die Tauchspule (5) in einem Luftspalt (6) aufnehmenden Magneten (7 8). Es ist vorgesehen, daß der Magnet (7 8) ein Elektromagnet mit supraleitenden Feldspulen ist.

Fig.1

Xerox Copy Centre

## Tauchspulaktuator

Die Erfindung bezieht sich auf einen Tauchspulaktuator für elektromagnetische Stellvorgänge, insbesondere für das Ansteuern von elektroakustischen oder mechanischen Vorrichtungen, mit einer mit der Vorrichtung mechanisch verbundenen Tauchspule und einem die Tauchspule in einem Luftspalt aufnehmenden Magneten.

Tauchspulaktuatoren eignen sich gut zur Ansteuerung von Lautsprechermembranen; sie haben eine relativ hohe Ansprechgeschwindigkeit und vermögen wie beispielsweise Hochleistungstauchspullautsprecher zeigen, ziemlich große Kräfte zu übertragen.

Darüber hinaus finden Tauchspulaktuatoren überall da Anwendung, wo Körper mit relativ hoher Beschleunigung über nicht allzugroße Entfernungen bewegt werden müssen. Beispiele für solche Anwendungen sind Proben bzw. Detektorhalterungen in Mössbauerapparaten, Relais, Ventilsteuerungen oder Lagestabilisatoren.

Tauchspulaktuatoren, wie sie beispielsweise bei Lautsprechern zur Anwendung kommen, bestehen aus einem ringförmig ausgebildeten Permanentmagneten mit einem in dem Permanentmagneten vorgesehenen konzentrischen Luftspaltpunkt. Der äußere Ring und der innere Kern des Permanentmagneten, haben entgegengesetzte Polung, so daß der Kern beispielsweise den Minuspol und der äußere Ring den Pluspol bilden können. Der ringförmige Luftspalt zwischen dem inneren Kern und dem äußeren Ring des Permanentmagneten nimmt eine Tauchspule auf, die im Zentrum eine kalottenförmigen Lautsprechermembran befestigt ist. Fließt elektrischer Strom durch die Tauchspule, so erfährt diese, je nach der Polarität des Stromes, eine sie in den Luftspalt hineinziehende oder eine sie aus dem Luftspalt herausdrückende Kraft. Den Gesetzen der Elektrodynamik zufolge wächst diese Kraft mit der Dichte des magnetischen Flusses im Luftspalt, dem durch eine Spulenwindung fließenden Strom und der Gesamtzahl der Windungen der Tauchspule.

Einerseits möchte man zur Erhöhung der magnetischen Flußdichte den Ringspalt so eng wie möglich machen, andererseits möchte man aber auch nicht den Durchmesser der Tauchspule allzu gering wählen. Dies würde zu einer unerwünschten Zunahme des ohmschen Widerstandes und damit zu einem Verlust an Dynamik bei vorgegebenem Spannungshub führen. Die elektrischen Verluste nehmen zu, und bei größeren Stromstärken besteht die Gefahr des Durchbrennens. Insofern ist die Qualität herkömmlicher Tauchspulaktuatoren durch die magnetischen Verhältnisse in herkömmlichen Ringkerntauchspulmagneten begrenzt.

Würde man andererseits versuchen, die Kraftwirkung auf die Tauchspule durch höhere Stromstärken bei größeren Durchmessern der Tauchspule zu erzielen, so hätte dies eine unerwünschte Gewichtszunahme der beweglichen Teile des Systems zur Folge. Um gleiche Beschleunigungen zu erzielen, werden somit wiederum größere Kräfte notwendig. Ein Teil der auf diese Weise erkauften Zusatzkräfte ist dann von vornherein aufgezehrt. Außerdem nimmt die Belastung des den Tauchspulenstrom liefernden Generators quadratisch mit dem in die Tauchspule eingespeisten Strom zu. Somit steigen auch die technischen Anforderungen an den Generator.

Es ist Aufgabe der Erfindung, einen Aktuator der eingangs erwähnten Art zu schaffen, der eine im Verhältnis zu der eingespeisten Energie höhere Arbeitsleistungen aufbringt als bekannte Aktuatoren.

Die gestellte Aufgabe ist erfindungsgemäß dadurch gelöst, daß der Magnet ein Elektromagnet mit supraleitenden Feldspulen ist.

Durch den Einsatz von supraleitenden Feldspulen läßt sich die Feldstärke im Luftspalt deutlich erhöhen, ohne den Luftspalt für die Tauchspule zu verkleinern. Die Aktuatorwirkung wird damit deutlich erhöht.

Nach einer weiteren Ausgestaltung der Erfindung ist vorgesehen, daß der Elektromagnet aufgeteilt ist in Teilmagnete, die zwischen sich den Luftspalt für die Tauchspule bilden, wobei die Elektromagneten aus supraleitenden Feldspulen und magnetierbaren Eisenkernen bestehen. Mit der zunehmenden Zahl von Elektromagneten steigt auch die Feldstärke und damit die Leistung des Aktuators.

Nach einer weiteren Ausgestaltung der Erfindung ist vorgesehen, daß die Elektromagneten Multilayerfeldspulen mit supraleitenden Strompfaden sind, wobei aufeinandergeschichtete keramische Plättchen mit gedruckten Strompfaden versehen sind, die von Plättchen zu Plättchen durchverbunden sind, und wobei die durchverbundenen Strompfade in ihrer Gesamtheit die Feldspule ergeben. Derartige Multilayerfeldspulen eignen sich besonders bei supraleitenden Materialien, die sich für den Siebdruck, für ein Aufsprühen oder ein fotochemisches Aufbringen eignen. Auch ein Tauchen und Einwalzen sind denkbar.

Der Aktuator nach der Erfindung eignet sich insbesondere für eine Lautsprecher- oder Mikrophonmembran. Andere Aktuatoranwendungen liegen im Bereich der Betätigung von Stößeln für Ventile, Bremsen, Türschlösser aber auch Relais und Lagestabilisatoren.

Die Erfindung wird anhand der Zeichnung näher erläutert. Es zeigen:

Fig. 1 einen Kalotenlautsprecher mit Tauchspule und das elektrische Feld bildenden supraleitenden Feldspulen,

Fig. 2 eine in Multilayertechnik ausgebildete Feldspule und

Fig. 3 eine Magnetanordnung mit vier supraleitenden Feldspulpaaren und einer Tauchspule.

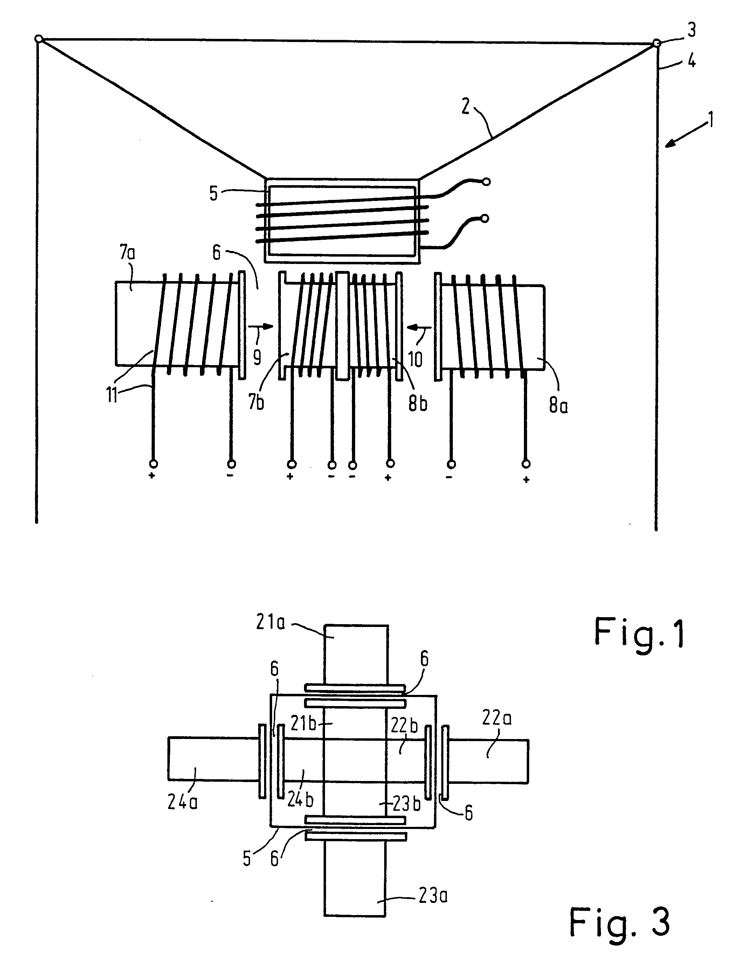

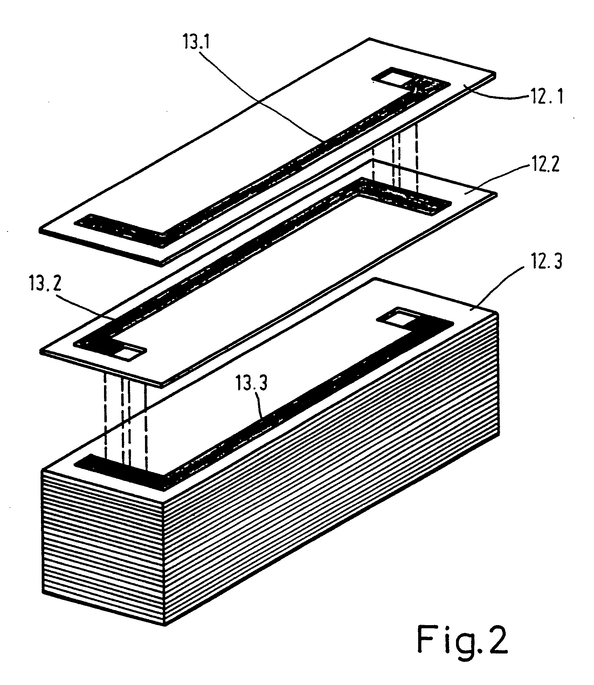

Fig. 1 zeigt einen Kalotenlautsprecher 1 mit einer kalotenförmigen Membran 2, deren äußerer Rand 3 in einem Lautsprecherkorb 4 festgelegt ist. Die Membran 2 ist im Bereich ihrer engsten Einschnürung mit einer Tauchspule 5 versehen.

Die Tauchspule 5 kann in Luftspalte 6 zwischen elektromagnetischen Feldspulen 7a, 7b und 8a, 8b eintauchen. Die Feldspulen 7a und 7b bzw. 8a und 8b bilden jeweils Spulenpaare zwischen den in Richtung auf die Mitte gerichtete elektromagnetische Felder ausgebildet werden. Die Feldrichtung in den Luftspalten 6 ist mit Pfeilen 9, 10 angedeutet.

Jede einzelne Spule 7a, 7b, 8a, 8b besteht aus einem weichmagnetischem Eisenkern 10 und einer supraleitenden Feldwicklung 11. Auch die Tauchspule kann aus supraleitendem Material bestehen.

Während des Betriebes taucht die Tauchspule 5 in die Luftspalte 6 ein und wird entsprechend dem Feld in den Luftspalten in diese hineingezogen oder aus ihnen herausgestoßen.

Fig. 2 zeigt eine Mulitlayerfeldspule, die aus einzelnen Keramikplättchen 12.1, 12.2 usw. aufgebaut ist. Auf die einzelnen Keramikplättchen 12 sind Strompfade 13.1, 13.2 usw. aufgedruckt. Je zwei Strompfade 13.1 und 13.2 ergänzen sich dabei zu einer geschlossenen Windung. Die Strompfade sind, wie sich aus der schaubildlichen Zeichnung nach Fig. 2 ergibt, immer mit den darunterliegenden Strompfaden verbunden. Die Strompfade 13.1, 13.2 usw. sind durch Siebdrucken, durch Aufsprühen, durch Tauchen, durch Einwalzen oder durch fotochemische Verfahren auf die einzelnen Keramikplättchen 12.1, 12.2 usw. aufgebracht. Die Feldspulen nach Fig. 2 sind Luftspulen, die eine so hohe Feldstärke haben, daß sie wie die Feldspulen 7a, 7b, 8a, 8b nach Fig. 2 eingesetzt werden können. Es handelt sich dabei aber um Luftspulen, da auf einen Eisenkern verzichtet werden muß.

Fig. 3 zeigt einen Aufbau mit vier Feldspulenpaaren 21a, 21b; 22a, 22b; 23a, 23b; und 24a, 24b; die im Stern angeordnet sind und sich jeweils zwischen Luftspalte 6 ausbilden. Alle Feldspulen 21 bis 24 sind als supraleitende Spulen mit hoher Feldstärke ausgebildet. In die Luftspalte 6 zwischen den Feldspulenpaaren 21 bis 24 ist eine Tauchspule 5 getaucht. Die Tauchspule ist in diesem Fall viereckig ausgebildet, was sich auch für die Tauchspule nach Fig. 1 empfiehlt. Mit Hilfe eines Tauchspulaktuators nach Fig. 3 können auf die Tauchspule 5 doppelt so große Kräfte aufgebracht werden wie bei der Anordnung nach Fig. 1.

## Ansprüche

1. Tauchspulaktuator für elektromagnetische Stellvorgänge, insbesondere für das Ansteuern von elektroakustischen oder mechanischen Vorrichtungen (2), mit einer mit der Vorrichtung (2) mechanisch verbundenen Tauchspule (5) und einem die Tauchspule (5) in einem Luftspalt (6) aufnehmenden Magneten (7 8),
dadurch gekennzeichnet, daß der Magnet (7 8) ein Elektromagnet mit supraleitenden Feldspulen (11) ist.

2. Tauchspulaktuator nach Anspruch 1,
dadurch gekennzeichnet, daß der Elektromagnet aufgeteilt ist in Teilmagnete (7a, 7b, 8a, 8b), die zwischen sich den Luftspalt (6) für die Tauchspule (5) bilden.

3. Tauchspulaktuator nach Anspruch 2,
dadurch gekennzeichnet, daß die Elektromagneten (7a, 7b, 8a, 8b) aus supraleitenden Feldspulen und magnetierbaren Eisenkernen sind.

4. Tauchspulaktuator nach Anspruch 2,
dadurch gekennzeichnet, daß die Elektromagneten Multilayerfeldspulen mit supraleitenden Strompfaden (13) sind, wobei aufeinandergeschichtete keramische Plättchen (12) mit gedruckten Strompfaden (13) versehen sind, die von Plättchen (12) zu Plättchen (12) durchverbunden sind, und wobei die durchverbundenen Strompfade (13) in ihrer Gesamtheit die Feldspule ergeben.

5. Tauchspulaktuator nach Anspruch 1,
dadurch gekennzeichnet, daß die Tauchspule aus supraleitendem Material besteht.

6. Tauchspulaktuator nach einem der Ansprüche 1 bis 4,
dadurch gekennzeichnet, daß die Vorrichtung (2) eine Lautsprecher- oder Mikrophonmembran ist.

7. Tauchspulaktuator nach einem der Ansprüche 1 bis 4,
dadurch gekennzeichnet, daß die Vorrichtung ein Stößel eines Ventils, einer Bremse, eines Türschlosses oder dgl. ist.

Fig.1

Fig. 3

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-2 915 199 (KERNFORSCHUNGSZENTRUM KARLSRUHE GmbH) * Spalte 4, Zeile 55 - Spalte 8, Zeile 61; Figuren 1-4 * --- | 1-3,5,7 | H 04 R 9/02 H 02 K 55/00 H 01 F 5/08 |
| X | DE-A-3 003 024 (KERNFORSCHUNGSZENTRUM KARLSRUHE GmbH) * Seite 6, Zeile 17 - Seite 10, Zeile 20; Anspruch 1; Figuren 1-4 * --- | 1,2,5,7 | |
| A | GB-A-1 309 631 (CENTRAL ELECTRICITY GENERATING BOARD) * Seite 4, Zeilen 41-121; Figuren 1-4 * --- | 1,2,4,7 | |
| A | GB-A-1 387 837 (ELECTRICAL RESEARCH ASSOCIATION LTD) * Seite 2, Zeile 30 - Seite 3, Zeile 46; Figuren 1-4 * ----- | 1,2,4,5,7 | |

|  | RECHERCHIERTE SACHGEBIETE (Int. Cl.4) |
|---|---|
|  | H 04 R H 02 K H 01 F |

Der vorliegende Recherchenbericht wurde für alle Patentansprüche erstellt

| Recherchenort | Abschlußdatum der Recherche | Prüfer |
|---|---|---|
| DEN HAAG | 09-03-1988 | DELANGUE P.C.J.G. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes Dokument

EPO FORM 1503 03.82 (P0403)